# EUROPEAN PATENT APPLICATION

(11) **EP 4 625 406 A1**
(43) Date of publication of application: **01.10.2025**
(21) Application number: 24383405.8
(22) Date of filing: 19.12.2024
(51) Int. Cl.: G10K 11/168, B32B 11/08, C08L 95/00, E04B 1/84

(54) **IMPROVED SOUND INSULATOR**

(71) Applicant: Derivados Asfalticos Normalizados, S.A., 28108 Alcobendas (ES)
(72) Inventor: MARTÍNEZ DE MARCOS, Álvaro, 19290 Fontanar (ES)
(74) Representative: Isern Patentes y Marcas S.L.

(57) **Abstract**

The present invention relates to a sound insulator made up of three layers: a bottom layer made of natural or synthetic polymers, an intermediate layer made of glass-fibre reinforced bituminous mass containing at least 65% by weight of mineral filler, and a top layer consisting of an aluminium composite film. Furthermore, the invention covers the method for manufacturing said insulator and its application as a sound insulating material in various building elements.

## Description

### Technical field

The technical field of the present invention falls within the scope of sound insulation materials and building technology. More specifically, it relates to composite sound insulators that combine multiple layers of materials with specific properties for noise reduction and improvement of acoustic comfort in a multitude of building elements.

### Background of the invention

Sound insulators are materials designed to reduce the transmission of sound between different spaces or building elements. Their main function is to minimise unwanted noise, thus improving acoustic comfort and protecting privacy within a building or structure. These materials are used in a variety of applications, such as in walls, ceilings, floors, doors and windows, for a quieter and more pleasant environment. Depending on their composition and structure, sound insulators can be efficient in blocking, absorbing or diffusing sound waves, adapting to the specific needs of each project.

The effectiveness of sound insulators depends on several factors, including their density, stiffness and the way they interact with sound waves. Technological advances have led to the development of a wide range of materials, ranging from cost-effective solutions to highly specialised systems for environments where strict sound control is required, such as in recording studios, hospitals, offices and houses.

Some of the most common materials are foams, fibreglass panels, bituminous materials, and composite films, all of which offer different performance characteristics, adapting to the various sound insulation needs in the construction sector.

In this context, there are several well-known solutions on the market for sound insulation. Some of them consist of a high-density synthetic polymer layer, while others use a bituminous layer combined with a polyethylene film. However, all these solutions have the drawback of an unsatisfactory fire rating. Furthermore, their tensile and tear strength properties can be significantly improved.

To that end, it would be desirable to have sound insulators that, while maintaining their sound insulation properties, have a fire rating of at least Bs1d0, in other words, a low reaction to fire, with very little smoke emissions and no release of flaming droplets or particles.

The present invention provides a solution to that problem.

### Description of the invention

The first aspect of the invention relates to a sound insulator characterised in that it comprises the following layers:
- a bottom layer made up of natural or synthetic polymers;
- an intermediate layer made up of glass-fibre reinforced bituminous mass, wherein the bituminous mass comprises at least 65% by weight of mineral filler in relation to the total weight of the bituminous mass; and
- a top layer comprising an aluminium composite film.

The sound insulation of the invention functions as an anti-resonant element for lightweight, porous or perforated materials, significantly improving the sound insulation of the system. Furthermore, it provides fire protection with a value of Bs1d0 or higher, ensuring the safety of the elements or materials it covers.

With its multi-layer design, the insulator also offers high tear and tensile strength, which makes it easy to install and ensures that it keeps its properties intact during the assembly process on different surfaces.

Additionally, the invention relates to a method for manufacturing a sound insulator according to the first aspect of the invention. Said manufacturing method is characterised in that it comprises the following steps:
a) provide the glass fibre reinforcement;
b) impregnate the reinforcement with the bituminous mass;
c) incorporate the top layer comprising the aluminium composite film;
d) incorporate the bottom layer made up of natural or synthetic polymers; and
e) apply temperature and pressure by means of rollers to obtain the desired thickness of the intermediate layer.

Lastly, the third aspect of the invention relates to the use of an insulator according to the first aspect of the invention or manufactured according to the method of the second aspect of the invention as a sound insulator in building elements. These building elements can be walls, partition walls, linings, metal roofing, wooden structural supports, false ceilings and other similar installations or ducts. The technical properties of the sound insulator allow it to be used in solutions classified as "interior cladding", further providing vapour barrier functions and thermo-reflexive action.

### Brief description of the drawings

The foregoing and other advantages and features will be more fully understood from the following detailed description of exemplary embodiments with reference to the accompanying drawings, which should be considered as illustrative and non-limiting, wherein:

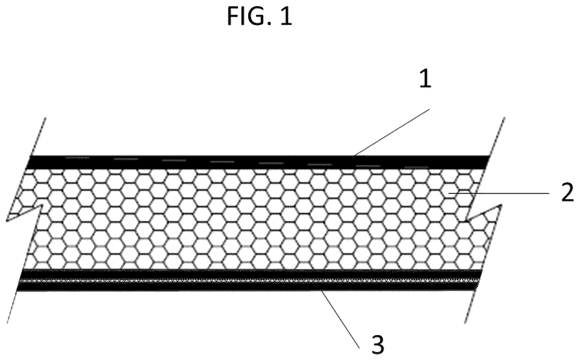

Figure 1 shows a cross-sectional view showing the different layers that make up the sound insulator of the invention, where (1) is the bottom layer, (2) is the intermediate layer and (3) is the aluminium composite film.

### Preferred embodiment of the invention

The present invention offers a solution to the problem of sound insulators that do not have a suitable fire rating, providing an insulating material with superior fire resistance and highly advantageous mechanical properties, which makes it an ideal choice for application on multiple types of building supports.

The first aspect of the invention relates to a sound insulator characterised in that it comprises the following layers:
- a bottom layer made up of natural or synthetic polymers;
- an intermediate layer made up of glass-fibre reinforced bituminous mass, wherein the bituminous mass comprises at least 65% by weight of mineral filler in relation to the total weight of the bituminous mass; and
- a top layer comprising an aluminium composite film.

In the preferred embodiment of the invention, the sound insulator comprises a bottom layer with a thickness between 0.01 and 20 mm. In another preferred embodiment of the sound insulator, the polymer of the bottom layer is selected from polyethylene, felt or cotton fibre batting or a silicone adhesive. In the preferred embodiments, the bottom layer of the sound insulator is made up of a 10 micron polyethylene layer, a layer of felt or cotton fibre batting with a thickness between 10 and 20 mm, or a silicone adhesive with a thickness between 20 and 30 mm.

In the context of the invention, "natural polymer" means polymers that occur in nature and are produced by living organisms. These polymers are obtained from biological sources, such as plants, animals or microorganisms. Natural polymers may include fibres such as cotton (of plant origin), wool (of animal origin), or silk, among others. Moreover, a "synthetic polymer" refers to polymers created by humans through controlled chemical processes, generally from petroleum products or other non-renewable resources. These polymers are produced by polymerising specific monomers under controlled conditions to obtain the desired properties.

In the preferred embodiment of the invention, the aluminium composite film is a polyethylene-aluminium-polyethylene (PET/Alu/PET) film. In another preferred embodiment of the invention, the aluminium composite film comprises an aluminium film with a smaller thickness between 5 and 50 microns, preferably between 5 and 25 microns, more preferably between 5 and 15 microns. In another preferred embodiment, the aluminium composite film comprises an aluminium film with a thickness of less than 10 microns. In the most preferred embodiment of the invention, the composite film is a polyethylene-aluminium-polyethylene (PET/Alu/PET) film wherein PET has a thickness of 12 microns and Alu has a thickness of 9 microns.

The term "composite film" refers to a film made from the combination of several materials, which may be made of different chemical or physical compositions. These materials are fused together to produce a product with specific characteristics that would not be possible to achieve with a single material. In the case of the present invention, the aluminium composite film is designed to provide an effective barrier against sound transmission, in addition to providing strength and durability properties.

In the preferred embodiment of the invention, the thickness of the intermediate layer of glass-fibre reinforced bituminous mass is between 2 and 10 mm, preferably between 2 and 6 mm.

In the context of the invention, the term "bituminous mass" or bitumen is a viscous, dark and sticky material that is obtained mainly from petroleum or as a by-product of petroleum distillation. It is mostly made up of hydrocarbons and is characterised by its high density and its ability to adhere to surfaces. In the context of sound insulators, bituminous mass is used given its ability to dampen vibrations and absorb sound, which makes it an effective material for reducing noise transmission. Furthermore, it can be reinforced with fibres, such as fibreglass, to improve its mechanical and strength properties.

In a preferred embodiment of the sound insulator of the first aspect, the mineral filler content is between 65% and 70% by weight in relation to the total weight of the bituminous mass. The mineral filler is selected from carbonates, biomass ash or mixtures thereof. The high mineral filler content of the bituminous mass gives the intermediate layer a high density while increasing the resistance to elongation of the sound insulator.

In a preferred embodiment of the sound insulator, said insulator is classified in accordance with UNE-EN 13501-1 :2019, with a fire rating of B-s1-d0 or higher.

In its second aspect, the invention relates to a method for manufacturing a sound insulator according to the first aspect of the invention. Said manufacturing method is characterised in that it comprises the following steps:
a) provide the glass fibre reinforcement;
b) impregnate the reinforcement with the bituminous mass;
c) incorporate the top layer comprising an aluminium composite film;
d) incorporate the bottom layer made up of natural or synthetic polymers; and
e) apply temperature and pressure to obtain the desired thickness of the intermediate layer.

In a preferred embodiment of the second aspect, the application of temperature and pressure in step e) is carried out in a calender.

The third aspect of the invention relates to the use of an insulator according to the first aspect of the invention or manufactured according to the method of the second aspect of the invention as a sound insulator in building elements. These building elements can be walls, partition walls, linings, metal roofing, wooden structural supports, false ceilings and other similar installations or ducts.

### Examples

### Comparison of the properties of the sound insulator of the invention compared to existing prior art products

A detailed comparison of the properties of the sound insulator developed in this invention compared to products currently available on the market has been carried out. In particular, the sound insulators of the invention (Examples 1 to 4) with varying thickness have been evaluated with solutions known in the prior art:
1. **Example 1 -** PET-Bitumen-PET/ALU/PET with an average thickness of 6 mm.
2. VISCOLAM^{®} 100 - Bitumen-PET with an average thickness of 6 mm.
3. TECSOUND^{®} 100 - High-density polymer with an average thickness of 5 mm.
4. **Example 2** - PET-Bitumen-PET/ALU/PET with an average thickness of 4 mm.
5. VISCOLAM^{®} 65 - Bitumen-PET with an average thickness of 4 mm.
6. INSOPLAS^{®} 6 - Bitumen-PET with an average thickness of 4 mm.
7. TECSOUND^{®} 70 - High-density polymer with an average thickness of 3.5 mm.
8. **Example 3** - Bitumen PET ALU PET with an average thickness of 6 mm.
9. VISCOLAM^{®} 70 Auto - Bitumen-PET with an average thickness of 4 mm.
10. TECSOUND^{®} 70 SY - High-density polymer with an average thickness of 3.5 mm.
11. **Example 4** - Bitumen-PET/ALU/PET with a total thickness of 6 mm.
12. TECSOUND^{®} 70 SY - High-density polymer with an average thickness of 2.5 mm.

A detailed comparison of both transverse and longitudinal tensile strength and elongation of the different sound insulators analysed is presented in Table 1.

**Table 1. Comparison of transverse and longitudinal tensile strength and elongation of the different sound insulators 1 to 12.**

| **Insulator** | **Longitudinal tensile strength (N/5cm) according to EN-12311-1** | **Transverse tensile strength (N/5cm) according to EN-12311-1** | **Longitudinal elongation (%) according to EN-12311-1** | **Transverse elongation (%) according to EN-12311-1** |
|---|---|---|---|---|
| 1 | 758 | 388 | 3 | 4 |
| 2 | NDP | NDP | NDP | NDP |
| 3 | ≥200 | ≥125 | >40 | >40 |
| 4 | 836 | 416 | 3 | 3 |
| 5 | NDP | NDP | NDP | NDP |
| 6 | ≥300 | ≥280 | NDP | NDP |
| 7 | ≥200 | ≥125 | >40 | >40 |
| 8 | 816 | 436 | 3 | 4 |
| 9 | NDP | NDP | NDP | NDP |
| 10 | ≥50 | ≥40 | >40 | >40 |
| 11 | 513 | 462 | 2 | 3 |
| 12 | ≥200 | ≥125 | >40 | >40 |

| | | | | |
|---|---|---|---|---|
| NDP=No Declared Property | | | | |

Next, a detailed comparison of tear strength per nail in both the transverse and longitudinal directions, as well as the low reaction to fire of the different sound insulators analysed, is presented in Table 2.

**Table 2. Comparison of longitudinal and transverse tear strength by nail and reaction to fire of the different sound insulators 1 to 12.**

| **Insulator** | **Longitudinal tear by nail (N) according to EN-12310-1** | **Transverse tear by nail (N) according to EN-12310-1** | **Reaction to fire according to EN13501-1** |
|---|---|---|---|
| 1 | 145 | 190 | B-s1-d0 |
| 2 | NDP | NDP | E - not declared |
| 3 | ≥125 | ≥125 | C-s2-d0 |
| 4 | 242 | 274 | B-s1-d0 |
| 5 | NDP | NDP | E - not declared |
| 6 | NDP | NDP | F |
| 7 | ≥125 | ≥125 | B-s2-d0 |
| 8 | 272 | 292 | B-s1-d0 |
| 9 | NDP | NDP | E - not declared |
| 10 | ≥125 | ≥125 | B-s2-d0 |
| 11 | 207 | 213 | B-s1-d0 |
| 12 | ≥125 | ≥125 | B-s2-d0 |

| | | | |
|---|---|---|---|
| NDP=No Declared Property | | | |

As can be observed in Tables 1 and 2, the sound insulators of the invention exhibit superior mechanical characteristics in all compared thickness ranges, compared to existing prior art products. In particular, the insulators of the invention are characterised by their high tensile and tear strength, as well as significantly higher fire rating.

## Claims

1. A sound insulator **characterised in that** it comprises the following layers:
- a bottom layer made up of natural or synthetic polymers;
- an intermediate layer made up of glass-fibre reinforced bituminous mass, wherein the bituminous mass comprises at least 65% by weight of mineral filler in relation to the total weight of the bituminous mass; and
- a top layer comprising an aluminium composite film.

2. The sound insulator according to the preceding claim, wherein the aluminium composite film is a polyethylene-aluminium-polyethylene (PET/Alu/PET) film.

3. The sound insulator according to any of the preceding claims, wherein the aluminium composite film comprises an aluminium film with a thickness between 5 and 50 microns, preferably between 5 and 25 microns, more preferably between 5 and 15 microns.

4. The sound insulator according to any of the preceding claims, wherein the thickness of the intermediate layer is between 2 and 10 mm, preferably between 2 and 6 mm.

5. The sound insulator according to any of the preceding claims, wherein the thickness of the bottom layer is between 0.01 and 20 mm.

6. The sound insulator according to any of the preceding claims, wherein the bottom layer material is selected from polyethylene, felt or cotton fibre batting or a silicone adhesive.

7. The sound insulator according to any of the preceding claims, wherein the mineral filler content is between 65% and 70% by weight of the total weight of the bituminous mass.

8. The sound insulator according to any of the preceding claims, wherein the mineral filler is selected from carbonates, biomass ash or mixtures thereof.

9. The sound insulator according to any of the preceding claims, wherein the insulator has a fire performance classification according to UNE-EN 13501-1:2019 of B-s1-d0 or higher.

10. A method for manufacturing a sound insulator according to any of claims 1 to 9, **characterised in that** it comprises the following steps:
a) provide the glass fibre reinforcement;
b) impregnate the reinforcement with the bituminous mass;
c) incorporate the top layer comprising an aluminium composite film;
d) incorporate the bottom layer made up of natural or synthetic polymers; and
e) apply temperature and pressure to obtain the desired thickness of the intermediate layer.

11. Use of an insulator according to any of claims 1 to 9 or manufactured according to the method according to claim 10 as a sound insulator in building elements.

## Amended claims

### Amended claims in accordance with Rule 137(2) EPC.

1. A sound insulator **characterised in that** it comprises the following layers:
- a bottom layer 1 made up of natural or synthetic polymers;
- an intermediate layer 3 made up of glass-fibre reinforced bituminous mass, wherein the bituminous mass comprises at least 65% by weight of mineral filler in relation to the total weight of the bituminous mass; and
- a top layer 2 comprising an aluminium composite film, wherein the aluminium composite film comprises an aluminium film with a thickness between 5 and 50 microns, preferably between 5 and 25 microns, more preferably between 5 and 15 microns.

2. The sound insulator according to the preceding claim, wherein the aluminium composite film is a polyethylene-aluminium-polyethylene (PET/Alu/PET) film.

3. The sound insulator according to any of the preceding claims, wherein the thickness of the intermediate layer 3 is between 2 and 10 mm, preferably between 2 and 6 mm.

4. The sound insulator according to any of the preceding claims, wherein the thickness of the bottom layer 1 is between 0.01 and 20 mm.

5. The sound insulator according to any of the preceding claims, wherein the bottom layer 1 material is selected from polyethylene, felt or cotton fibre batting or a silicone adhesive.

6. The sound insulator according to any of the preceding claims, wherein the mineral filler content is between 65% and 70% by weight of the total weight of the bituminous mass.

7. The sound insulator according to any of the preceding claims, wherein the mineral filler is selected from carbonates, biomass ash or mixtures thereof.

8. The sound insulator according to any of the preceding claims, wherein the insulator has a fire performance classification according to UNE-EN 13501-1:2019 of B-s1-d0 or higher.

9. A method for manufacturing a sound insulator according to any of claims 1 to 8, **characterised in that** it comprises the following steps:
a) provide the glass fibre reinforcement;
b) impregnate the reinforcement with the bituminous mass;
c) incorporate the top layer 2 comprising an aluminium composite film;
d) incorporate the bottom layer 1 made up of natural or synthetic polymers; and
e) apply temperature and pressure to obtain the desired thickness of the intermediate layer.

10. Use of an insulator according to any of claims 1 to 8 or manufactured according to the method according to claim 9 as a sound insulator in building elements.
